(19) Europäisches Patentamt
European Patent Office
Office européen des brevets

(11) **EP 3 503 413 B1**

(12) **FASCICULE DE BREVET EUROPEEN**

(45) Date de publication et mention
de la délivrance du brevet:
**01.07.2020 Bulletin 2020/27**

(51) Int Cl.:
***H04B 1/7163*** *(2011.01)*   *H04B 1/16* *(2006.01)*
***H04B 7/0413*** *(2017.01)*

(21) Numéro de dépôt: **18213669.7**

(22) Date de dépôt: **18.12.2018**

(54) **RÉCEPTEUR UWB IMPULSIONNEL MULTI-ANTENNE**

**MULTIANTENNEN-IMPULS-UWB-EMPFÄNGER**

**MULTI-ANTENNA PULSE-BASED UWB RECEIVER**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2017 FR 1762768**

(43) Date de publication de la demande:
**26.06.2019 Bulletin 2019/26**

(73) Titulaire: **Commissariat à l'énergie atomique
et aux énergies alternatives
75015 Paris (FR)**

(72) Inventeurs:
• **VO, Tien-Tu
38054 GRENOBLE (FR)**
• **HAMEAU, Frédéric
38054 GRENOBLE (FR)**
• **OUVRY, Laurent
38054 GRENOBLE (FR)**
• **RAT, Venceslass
38054 GRENOBLE (FR)**

(74) Mandataire: **Brevalex
56, Boulevard de l'Embouchure
B.P. 27519
31075 Toulouse Cedex 2 (FR)**

(56) Documents cités:
**CN-A- 106 533 518     US-A1- 2008 317 160**

• **ALWAN ELIAS A ET AL: "Coding-based
ultra-wideband digital beamformer with
significant hardware reduction", ANALOG
INTEGRATED CIRCUITS AND SIGNAL
PROCESSING, SPRINGER NEW YORK LLC, US,
vol. 78, no. 3, 4 juillet 2013 (2013-07-04), pages
691-703, XP035311601, ISSN: 0925-1030, DOI:
10.1007/S10470-013-0102-2 [extrait le 2013-07-04]**

**Description**

**DOMAINE TECHNIQUE**

La présente invention concerne de manière générale les récepteurs UWB (*Ultra Wide* Band) impulsionnels multi-antennes, notamment pour des systèmes de télécommunication MIMO-UWB (*Multiple Input Multiple Output UWB*).

**ÉTAT DE LA TECHNIQUE ANTÉRIEURE**

Les systèmes de télécommunication UWB sont bien connus de l'état de la technique. Ils ont pour spécificité d'opérer sur des signaux à bande spectrale ultra-large (UWB). On entend généralement par signal UWB un signal conforme au masque spectral stipulé dans la réglementation FCC du 14 février 2002, révisée en mars 2005, c'est-à-dire, pour l'essentiel, un signal dans la bande spectrale de 3.1 à 10.6 GHz présentant une largeur de bande d'au moins 500 MHz à -10 dB.

Les signaux UWB se divisent en deux grandes catégories : les signaux multi-bande OFDM (MB-OFDM) et les signaux UWB impulsionnels ou IR-UWB (*Impulse Radio UWB*). Un signal IR-UWB est constitué d'impulsions très courtes, ayant une durée $T_p$ de l'ordre de centaines de picosecondes à 1 ou 2 nanosecondes, se répétant à une fréquence de répétition (*Pulse Repetition Frequency*), $f_{PRP}$. Dans la suite, il ne sera question que de signaux IR-UWB.

La technologie UWB a été utilisée relativement tôt dans les systèmes de télécommunication multi-antenne ou MIMO (*Multiple Input Multiple Output)* offrant, grâce à leur diversité spatiale, des capacités de canal sensiblement supérieures aux systèmes classiques SISO (*Single Input Single Output*). Ces systèmes sont qualifiés par l'acronyme UWB-MIMO. Le cas échéant, cette diversité spatiale peut être complétée par une diversité temporelle en utilisant un codage spatio-temporel. Une présentation générale des systèmes UWB-MIMO pourra être trouvée dans l'article de T. Kaiser et al. intitulé « An overview of Ultra-Wide-Band systems with MIMO » publié dans Proc. of the IEEE, vol. 97, No. 2, pp. 285-312.

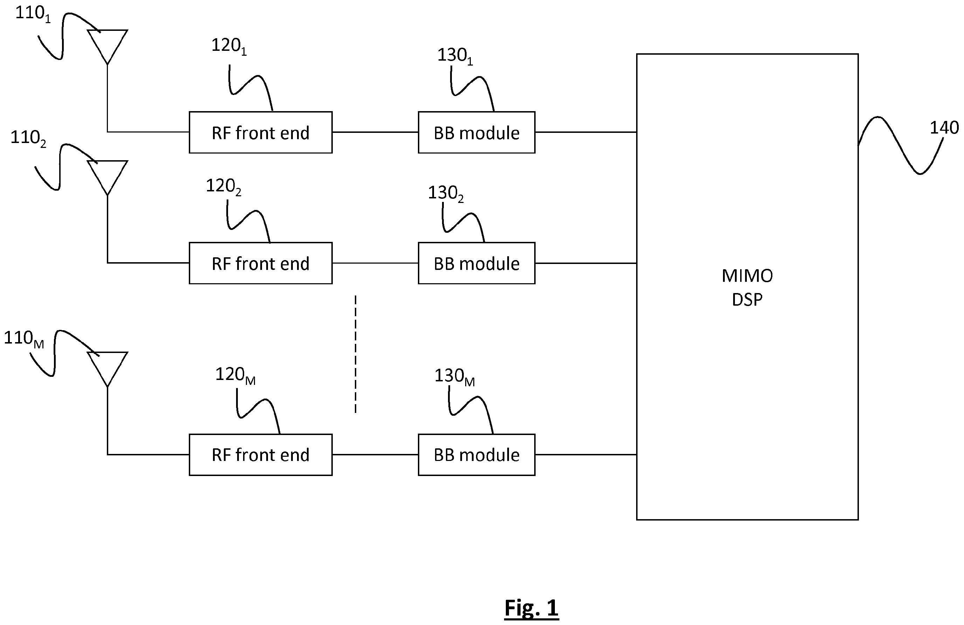

On a représenté en Fig. 1 l'architecture conventionnelle d'un récepteur UWB-MIMO.

Ce récepteur comprend une pluralité $M$ d'antennes, $110_1,...,110_M$, recevant un signal RF d'un émetteur (ou des signaux RF de plusieurs émetteurs). Les signaux reçus sont traités par des modules de traitement RF, encore dénommés frontaux RF, $120_1,...,120_M$. Un frontal RF comprend typiquement un amplificateur bas bruit (LNA), un mélangeur pour ramener le signal en bande de base et un convertisseur analogique numérique. Les signaux en bandes de base sont ensuite traités par des modules de traitement en bande de base $130_1,...,130_M$ avant d'être fournis à un module de traitement MIMO (DSP MIMO), 140. Le module DSP MIMO peut par exemple déterminer une direction d'arrivée, effectuer une formation de faisceau en réception, un décodage spatial ou spatio-temporel.

Une telle architecture a cependant pour inconvénient de nécessiter autant de frontaux RF que d'antennes de réception. Elle est par conséquent encombrante en termes de surface occupée sur un circuit intégré et consommatrice d'énergie. Elle peut convenir à des implémentations où la complexité et la consommation ne sont pas prioritaires (station de base par exemple) mais devient problématique lorsque les ressources sont contraintes (terminal mobile par exemple).

Dans le domaine des systèmes MIMO à bande étroite, il est connu de mutualiser un frontal RF entre plusieurs voies de traitement d'un récepteur multi-antenne. Cette mutualisation est obtenue grâce à un multiplexage par codes en amont du frontal RF et un démultiplexage en aval de ce dernier. On trouvera une description d'un tel récepteur multi-antenne dans l'article de F. Tzeng et al. intitulé « A CMOS code-modulated path-sharing multi-antenna receiver front-end » publié dans IEEE Journal of Solid State Circuits, vol. 44, No. 5, Mai 2009, pp. 1321-1335.

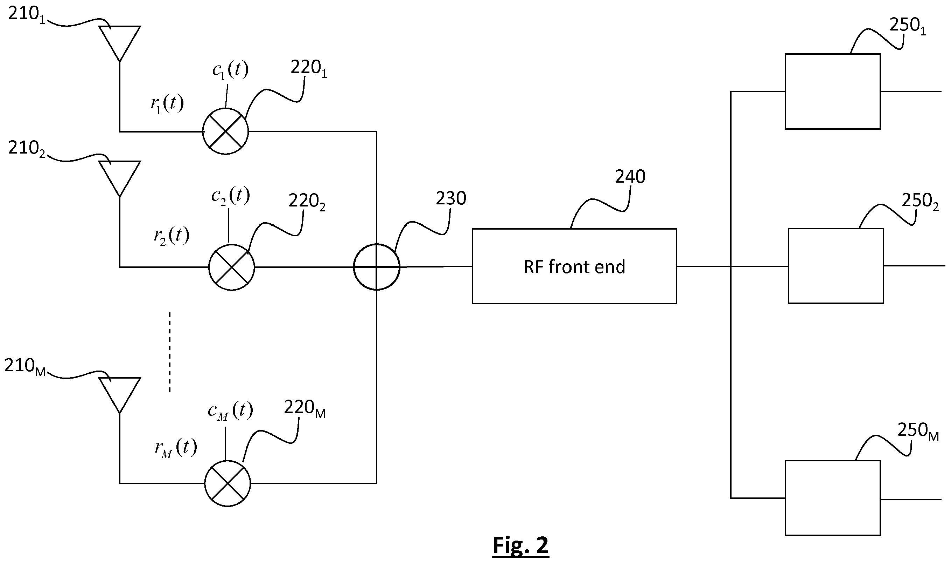

Une architecture de récepteur à frontal RF mutualisé a été représentée en Fig. 2.

Le signal reçu par chaque antenne $210_i$ est ici multiplié en $220_i$ par un code de multiplexage propre à la voie de traitement associée, les codes de multiplexage des différentes voies étant choisis orthogonaux. Plus précisément, le signal $r_i(t)$ reçu par l'antenne $210_i$ est étalé spectralement par un code $c_i(t)$ de fréquence chip (rythme du code) multiple (d'un facteur plus grand ou égal à $M$) de la bande passante du signal. Les signaux reçus ainsi étalés sont ensuite sommés en 230, leur somme est fournie au frontal RF mutualisé 240. Le signal de sortie du frontal RF fait l'objet d'un démultiplexage par codes. Autrement dit, ce signal de sortie est corrélé avec le code $c_i(t)$ dans des filtres adaptés (ou de manière équivalente les corrélateurs) respectifs $250_1,...,250_M$, chaque signal ainsi désétalé correspondant à une voie.

Cette architecture permet de réduire sensiblement la surface allouée au traitement RF ainsi que sa consommation en énergie. Toutefois, cette simplification se fait au prix de spécifications plus sévères pour le frontal RF, en raison de l'augmentation de la bande passante à son entrée. Ainsi par exemple, si le frontal RF en question comprend un convertisseur analogique numérique, ce convertisseur devra être capable de tenir la même dynamique d'entrée pour une bande passante sensiblement plus élevée.

L'article de E. Alwan et al. intitulé "Coding-based ultra-wideband digital beamformer with significant hardware réduction" publié dans Analog Integrated Circuits and Signal Processing, vol. 78, no. 3, juillet 2013, pp. 691-703, et les demandes de brevet US 2008/0317160 A1 et CN 106533518 A divulguent autres architectures de multiplexage par codes.

Il est à noter que le multiplexage par codes peut intervenir à différents stades du frontal RF. Ainsi, par exemple, le multiplexage peut être réalisé en bande de base et ne concerner par conséquent que le traitement analogique en bande de base et la conversion analogique numérique. Alternativement, il peut être réalisé au niveau du LNA (CM-LNA ou *Code Modulating Low Noise Amplifier*), le reste de la chaine RF, le traitement analogique en bande de base et la conversion analogique numérique étant alors mutualisés.

Quel que soit le niveau de multiplexage envisagé, il n'est pas envisageable d'étaler significativement la bande spectrale d'un signal UWB, par définition déjà supérieure à 500 MHz, pour permettre la mutualisation d'un frontal RF dans un récepteur UWB impulsionnel multi-antenne.

Un objet de la présente invention est par conséquent de proposer un récepteur UWB impulsionnel multi-antenne permettant de mutualiser un frontal RF.

## EXPOSÉ DE L'INVENTION

La présente invention est définie par un récepteur UWB impulsionnel comprenant une pluralité $M$ d'antennes, chaque antenne du récepteur recevant un signal d'antenne, ledit signal d'antenne étant un signal UWB impulsionnel formé d'impulsions successives modulées au moyen d'un code d'émission à une fréquence bribe, $f_{PRP}$, un symbole d'information étant codé sur $N_c$ impulsions successives, où $N_c$ est la longueur du code d'émission, ledit récepteur comprenant :

- un étage de multiplexage configuré pour multiplexer au moyen de codes orthogonaux les signaux d'antennes pour fournir un signal multiplexé, chaque code orthogonal étant associé à une antenne distincte, la fréquence bribe desdits codes orthogonaux étant égale à un sous-multiple, $f_{PRP}/P$, de la fréquence bribe du code d'émission où $P < N_c$ est un diviseur entier de $N_c$ ;
- un frontal RF recevant ledit signal multiplexé ;
- un étage de démultiplexage configuré pour démultiplexer le signal en sortie du frontal RF au moyen desdits codes orthogonaux, ledit étage de démultiplexage fournissant $M$ signaux démultiplexés correspondant aux différentes antennes.

L'étage de multiplexage comprend avantageusement des multiplieurs, chaque multiplieur étant configuré pour multiplier chaque signal d'antenne par un code orthogonal associé à cette antenne, les différents codes orthogonaux étant fournis aux multiplieurs à la fréquence $f_{FRP}/P$, ainsi qu'un sommateur configuré pour sommer les signaux d'antennes ainsi multipliés.

Selon un exemple de réalisation, $M = 2$ et les antennes sont des antennes différentielles, un signal d'antenne d'une première antenne différentielle étant fourni à une première entrée d'un premier commutateur et un signal d'antenne opposé, à une seconde entrée dudit premier commutateur, un signal d'antenne d'une seconde antenne différentielle étant fourni à une première entrée d'un second commutateur et un signal d'antenne opposé, à une seconde entrée dudit second commutateur, un premier signal de sortie dudit premier commutateur étant fourni à un premier combineur RF et un second signal de sortie dudit premier commutateur étant fourni à un second combineur RF, un premier signal de sortie dudit second commutateur étant fourni au premier combineur RF et un second signal de sortie dudit second commutateur étant fournie au second combineur RF, les premier et second commutateurs commutant leurs première et seconde entrées respectivement vers leurs première et seconde sorties dans une première position de commutation et vers leurs seconde et première sorties dans une seconde position de commutation, les premier et second commutateurs étant contrôlés par les codes orthogonaux respectivement associés à la première antenne et la seconde antenne différentielle, le premier combineur RF combinant le premier signal de sortie du premier commutateur et le premier signal de sortie du second commutateur pour fournir un premier signal combiné, le second combineur RF combinant le second signal de sortie du premier commutateur et le second signal de sortie du second commutateur pour fournir un second signal combiné, les premier et second signaux combinés étant fournis à une entrée différentielle du frontal RF.

Le frontal RF comprend avantageusement un amplificateur bas bruit différentiel, les premier et second signaux combinés étant fournis à cet amplificateur comme entrée différentielle.

Selon un autre exemple de réalisation, chaque signal d'antenne est fourni à un premier commutateur le commutant vers un déphaseur dans une première position de commutation et vers la seconde entrée d'un second commutateur dans une seconde position de commutation, la première entrée du second commutateur recevant le signal d'antenne déphasé par le déphaseur, le second commutateur commutant sa première entrée vers sa sortie dans une première position de commutation et sa seconde entrée vers sa sortie dans une seconde position de commutation, les premier et second commutateurs étant contrôlés par le code orthogonal associé à ladite antenne, les signaux de sortie des seconds commutateurs étant combinés dans un combineur RF pour fournir ledit signal multiplexé au frontal RF.

Dans ce cas, le frontal RF comprend avantageusement un amplificateur bas bruit, ledit signal multiplexé étant fourni à l'entrée dudit amplificateur.

Typiquement, lesdites impulsions sont sinusoïdales à une fréquence centrale $f_0$ et le frontal RF comprend un mélangeur en quadrature à cette fréquence pour translater le signal multiplexé en bande de base.

Le frontal RF peut comprendre un convertisseur analogique numérique pour convertir le signal multiplexé en bande de base.

Quel que soit le mode de réalisation, l'étage de démultiplexage comprend avantageusement une pluralité $M$ de corrélateurs, chaque corrélateur étant configuré pour corréler le signal en sortie du frontal RF sur un temps symbole avec un code composite $c_{\left\lfloor \frac{\ell}{P}\right\rfloor}^m c_\ell^e$, $\ell = 0,...,N_c$ -1 où $c_\ell^e$, $\ell = 0,...,N_c$ -1 est le code d'émission et $c_i^m$, $i = 0,...,N_p - 1$, est le code orthogonal associé à l'antenne $m$.

Le récepteur peut en outre comprendre un étage de traitement multi-antenne recevant lesdits $M$ signaux démultiplexés, ledit étage de traitement multi-antenne étant configuré pour effectuer un traitement parmi une formation de faisceau, une détermination de direction d'arrivée, un décodage spatial ou spatio-temporel.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1, déjà décrite, représente de manière schématique l'architecture d'un récepteur d'un système UWB-MIMO connu de l'état de la technique ;

La Fig. 2, déjà décrite, représente un récepteur d'un système MIMO à bande étroite dans lequel un frontal RF est mutualisé par multiplexage de codes ;

La Fig. 3 représente de manière schématique un récepteur IR-UWB multi-antenne dans lequel un frontal RF est mutualisé au moyen d'un multiplexage par codes, selon un mode de réalisation de l'invention ;

La Fig. 4 représente l'effet de codes à transitions imparfaites dans l'étage de démultiplexage du système de la Fig. 3 ;

Les Fig. 5A et 5B représentent des exemples de réalisation d'un étage de multiplexage par codes pour le récepteur de la Fig. 3.

## EXPOSÉ DÉTAILLÉ DE MODES DE RÉALISATION PARTICULIERS

Dans la suite nous considérerons un récepteur UWB impulsionnel possédant $M \geq 2$ antennes. On rappelle qu'un signal UWB impulsionnel est constitué d'une séquence d'impulsions modulées se succédant à fréquence de répétition $f_{PRP} = 1/T_{PRP}$, et pouvant être exprimé sous la forme :

$$s(t) = \sum_{k=-\infty}^{+\infty} \sum_{j=0}^{N_c-1} p\left(t - kT_d - jT_c\right) c_j^e d_k \qquad (1)$$

où $T_d = N_C T_C$ est la durée symbole, c'est-à-dire la durée correspondant à l'émission d'un symbole d'information, $T_c$ est la période chip (ou bribe) égale à la période de répétition $T_{PRP}$, $c_j^e$, $j = 0,..,N_c$ -1 est le code utilisé à l'émission avec $c_j^e \in \{-1, +1\}$ dans le cas d'un code binaire, $p(t)$ est la fonction d'onde de l'impulsion élémentaire et $d_k$ est un symbole d'information.

Dans un autre contexte d'application, le récepteur UWB impulsionnel pourra recevoir un signal radar IR-UWB. Dans ce cas, $d_k$ ne représente pas un symbole d'information émis par un émetteur mais simplement l'amplitude complexe du signal réfléchi par la cible.

La bande passante du signal UWB impulsionnel est donnée par la bande passante (> 500 MHz) de l'impulsion élémentaire de durée de l'ordre de 1 à 2ns alors que la bande passante de modulation des symboles d'information correspond à la fréquence de répétition $f_{PRP} = 1/T_{PRP}$ avec généralement $T_{PRP}$ de l'ordre de 16 à 128 ns.

L'idée à la base de la présente invention est de tirer parti du fait que la bande passante de modulation soit sensiblement inférieure à la bande passante du signal IR-UWB pour effectuer un multiplexage par codes orthogonaux, sans élargissement de cette dernière.

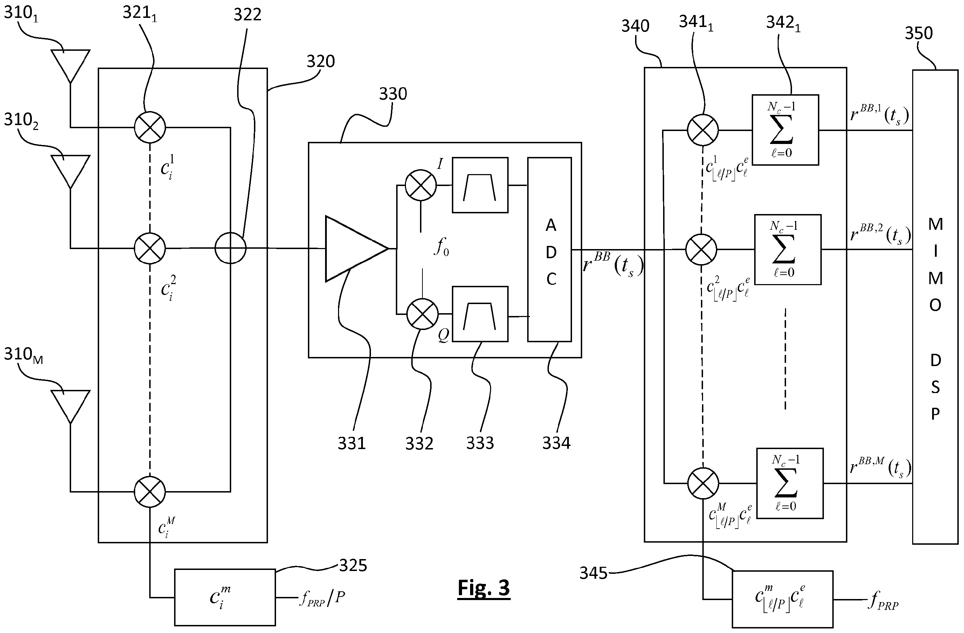

La Fig. 3 représente de manière schématique un récepteur UWB multi-antenne dans lequel un frontal RF est mutualisé au moyen d'un multiplexage par codes, selon un mode de réalisation de l'invention.

Le récepteur UWB multi-antenne 300 comprend une pluralité d'antennes $310_1,...,310_M$, un étage de multiplexage par codes, 320, le signal reçu par une antenne $310_m$ étant multiplié en $321_m$ par un code, dit code de multiplexage, défini par la séquence $c_i^m$, $i = 0,...,N_p$ -1 où $c_i^m \in \{-1,+1\}$, dans le cas d'un code binaire, et $N_p$ est la longueur du code, choisie égale à un sous-multiple de $N_c$, autrement dit $N_p = \dfrac{N_c}{P}$ avec $1 < P < N_c$.

Les codes $c_i^m$, $i = 0,...,N_p$ -1 sont choisis orthogonaux, autrement dit :

$$\sum_{i=0}^{N_p-1} c_i^m c_i^{m'} = N_p \delta_{m,m'} \tag{2}$$

où $\delta_{m,m'}$ est le symbole de Kronecker. On pourra utiliser par exemple des codes de Hadamard à cette fin.

Les signaux en sortie de l'étage de l'étape de multiplexage par codes sont sommés en 322 et le signal résultant est fourni au frontal RF mutualisé entre les $M$ voies, 340. Ce dernier peut comprendre par exemple un amplificateur bas-bruit (LNA), 331, un mélangeur à la fréquence centrale $f_0$ des impulsions (lorsque celles-ci ont une forme sinusoïdale), 332, un filtrage passe bande, 333, un convertisseur analogique numérique, 334.

Le signal de sortie du frontal RF est ensuite démultiplexé dans un étage de démultiplexage 340 pour restituer les signaux correspondant aux différentes voies, ces signaux étant fournis au module de traitement multi-antenne (MIMO DSP), 350.

Le module de traitement multi-antenne peut réaliser un traitement quelconque sur les signaux démultiplexés par exemple une formation de faisceaux dans une ou plusieurs direction(s), la détermination d'une direction d'arrivée, un décodage spatial voire spatio-temporel, de manière connue en soi.

Le signal reçu par l'antenne $m$ après multiplication par le code de multiplexage $c_i^m$, $i = 0,...,N_p$ -1 peut s'écrire sous la forme :

$$r^m(t) = \sum_{k=-\infty}^{+\infty} \sum_{i=0}^{N_p-1} \sum_{j=0}^{P-1} p\left(t - kT_d - (iP+j)T_c - \tau^m\right) c_i^m c_{iP+j}^e d_k \tag{3}$$

où $\tau^m$ est le retard en réception à l'antenne $m$.

Le signal en sortie du sommateur 322 s'exprime donc comme suit:

$$r(t) = \sum_{k=-\infty}^{+\infty} \sum_{m=1}^{M} \sum_{i=0}^{N_p-1} \sum_{j=0}^{P-1} p\left(t - kT_d - (iP+j)T_c - \tau^m\right) c_i^m c_{iP+j}^e d_k \tag{4}$$

En sortie du frontal RF, 330, le signal numérique en bande de base, $r^{BB}(t)$, est corrélé avec le code composite $c_i^m c_{iP+j}^e$, $j = 0,..., P$ -1, $i = 0,...,N_p$ -1 de longueur $N_c = PN_p$ pour restituer le signal de la voie $m$, après traitement par le frontal RF.

Si l'on note $\Lambda$ le traitement (supposé linéaire) du frontal RF, l'entrée de l'étage de démultiplexage peut s'écrire :

$$r^{BB}(t_s) = \sum_{k=-\infty}^{+\infty} \sum_{m=1}^{M} \sum_{i=0}^{N_p-1} \sum_{j=0}^{P-1} \Lambda\left( p\left(t_s - kT_d - (iP+j)T_c - \tau^m\right)\right) c_i^m c_{iP+j}^e d_k$$

$$\tag{5}$$

où $t_s$ représente un instant d'échantillonnage, la fréquence d'échantillonnage étant supposée égale à $f_{PRP} = 1/T_c$.

Le signal $r^{BB}(t_s)$ peut s'exprimer plus simplement, après changement d'indice :

$$r^{BB}(t_s) = \sum_{k=-\infty}^{+\infty} \sum_{m=1}^{M} \sum_{\ell=0}^{N_c-1} \Lambda\left( p\left( t_s - kT_d - \ell T_c - \tau^m \right) \right) c^m_{\left\lfloor \frac{\ell}{P} \right\rfloor} c^e_\ell d_k \qquad (5')$$

Après corrélation avec le code composite $c^m_{\left\lfloor \frac{\ell}{P} \right\rfloor} c^e_\ell$, $\ell = 0,...,N_c$ -1, par multiplication en $341_m$ et sommation en $342_m$, le signal relatif à la voie / antenne $m$ n'est autre que :

$$r^{BB,m}(t_s) = N_c \sum_{k=-\infty}^{+\infty} \Lambda\left( p\left( t_s - kT_d - \tau^m \right) \right) d_k \qquad (6)$$

puisque $c^m_{\left\lfloor \frac{\ell}{P} \right\rfloor} c^e_\ell c^m_{\left\lfloor \frac{\ell}{P} \right\rfloor} c^e_\ell = 1$. Ce signal est bien, à un facteur scalaire prêt, celui qui aurait été fourni par un frontal RF dédié à la voie $m$ dans une architecture conventionnelle. Les interférences inter-voies sont parfaitement éliminées grâce à l'orthogonalité des codes de multiplexage.

On a supposé ci-dessus que la corrélation était réalisée en une seule passe avec le code composite. L'homme du métier comprendra toutefois qu'elle pourra être réalisée de manière équivalente par une première passe de multiplication avec le code d'émission suivie d'une seconde passe de corrélation avec le code orthogonal ou inversement.

Dans les expressions (3) à (6), nous avons fait abstraction du terme de bruit. On remarquera cependant que si l'on fait intervenir des bruits additifs blancs gaussiens indépendants au niveau des différentes antennes de réception, la dégradation du rapport signal à bruit en sortie n'est au maximum de $10\log_2(M)$ (en raison de la sommation des signaux des différentes voies), ce qui est généralement acceptable.

Enfin, nous avons supposé dans les expressions (3) à (6) que les temps de transition entre bribes de code $c^m_i$, $i = 0,...,N_p$ -1 étaient négligeables, autrement dit que les flancs de transition entre bribes successives du code, $c^m_i$, $c^m_{i+1}$, étaient parfaitement droits. En pratique, comme nous le verrons plus loin, ces temps de transition ne sont pas nuls. Toutefois, tant qu'ils restent faibles devant la période de répétition $T_c$ et les temps de retard $\tau^m$, $m = 1,...,M$, l'expression (6) reste valable. En revanche, si ce n'est pas le cas, les bribes peuvent être modélisées au moyen d'une forme approximativement trapézoïdale, $w_{\tau_c}(t)$, telle que $w_{\tau_c}(t) = 1$, $\tau_c \le t \le PT_c - \tau_c$, croissant linéairement de 0 à 1 entre $t = 0$ et $t = \tau_c$, puis décroissant linéairement de 1 à 0 entre $t = PT_c - \tau_c$ et $t = PT_c$. L'expression (5) devient alors :

$$r^{BB,m}(t_s) = \sum_{k=-\infty}^{+\infty} \sum_{i=0}^{N_p-1} \sum_{j=0}^{P-1} \Lambda\left( p\left( t_s - kT_d - (iP+j)T_c - \tau^m \right) \right) w_{\tau_c}\left( t_s - kT_d - iPT_c \right) d_k$$

$$(7)$$

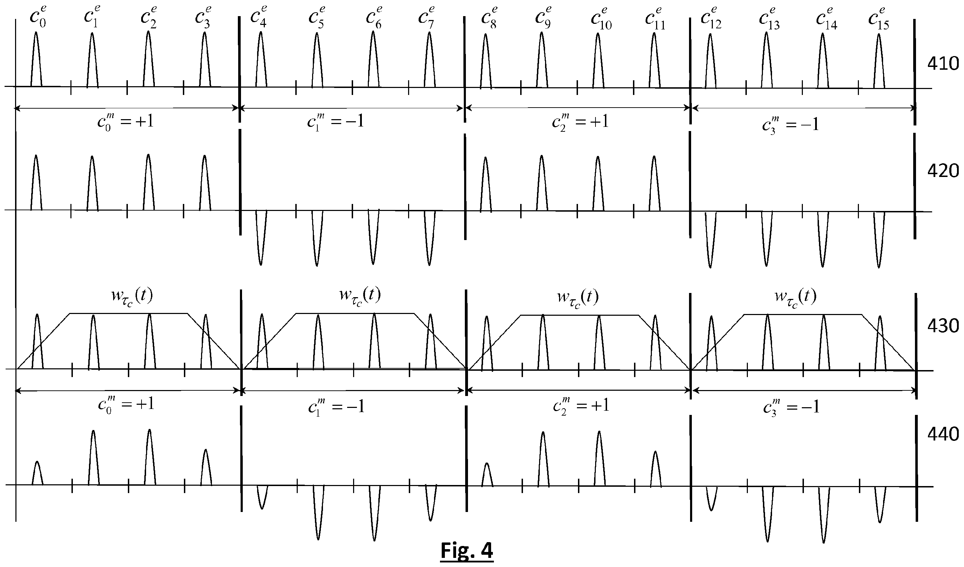

La Fig. 4 illustre la situation où les bribes de code présentent des transitions imparfaites, autrement dit où les temps de transition entre bribes successives ne sont plus négligeables vis-à-vis de $T_c$ ou des temps de retard $\tau^m$.

On a représenté en 410 un signal d'antenne correspondant à la réception d'un symbole. L'intervalle de temps considéré est donc un temps symbole à savoir $N_c T_c$. La modulation à l'émission est réalisée ici par un code de longueur $N_c$ = 16 bribes et le multiplexage par codes est réalisé par un code de longueur $N_p$ = 4 bribes. Pour des raisons de simplicité de représentation, les bribes du code de modulation ont été ici toutes prises égales à 1. Le code de multiplexage a été pris égal à {+1,-1,+1,-1}.

On a représenté en 420 le même signal d'antenne après multiplication par le code de multiplexage $c^m_i$, $i = 0,...,N_p$ -1, lorsque les bribes sont à transitions parfaites.

Par comparaison, on a représenté en 430 et 440 le même signal d'antenne, respectivement, avant et après multiplication par le code de multiplexage lorsque les transitions entre bribes sont imparfaites.

On remarque que les impulsions en limite des bribes du code de multiplexage, autrement dit dans les périodes de transition, sont atténuées. Cette atténuation est quasi-aléatoire car elle dépend de la position des impulsions du signal IR-UWB par rapport aux transitions du code de multiplexage. Après démultiplexage, le signal présente par conséquent une atténuation globale et une distorsion, puisque des codes de modulation différents seront atténués différemment.

Afin de réduire cette distorsion, il est possible de choisir un code de multiplexage plus « lent », autrement dit une longueur $N_p$ plus faible ($P$ plus élevé). Ainsi, pour un même symbole, la proportion d'impulsions en limite de bribes du code de multiplexage sera moins importante et le signal résultant moins atténué et distordu.

Alternativement, on pourra effectuer une pondération des échantillons en limite de bribes dans l'étage de démultiplexage pour éliminer ou réduire la contribution des impulsions distordues.

Par exemple, on pourra fenêtrer les échantillons en ne conservant que ceux tels que $\tau_c + kT_d + iPT_c \leq t_s \leq kT_d + (P+1)T_c - \tau_c$. Dans ce cas, le signal de la voie $m$ en sortie de l'étage de démultiplexage peut s'écrire :

$$r^{BB,m}(t_s) =$$

$$\sum_{k=-\infty}^{+\infty} \sum_{i=0}^{N_p-1} \sum_{j=0}^{P-1} \Lambda\left( p\left(t_s - kT_d - (iP+j)T_c - \tau^m\right)\right) G\left(t_s - kT_d - iPT\right) w_{\tau_c}\left(t_s - kT_d - iPT_c\right) d_k$$

$$(8)$$

où $G(t)$ est une fonction de fenêtrage telle que $G(t) = 1$ pour $\tau_c \leq t \leq PT_c - \tau_c$ et $G(t) = 0$ partout ailleurs.

Cette élimination des échantillons en limite de bribes pourra néanmoins altérer l'orthogonalité entre voies, altération qui sera faible si le code de multiplexage est lent au sens ci-dessus.

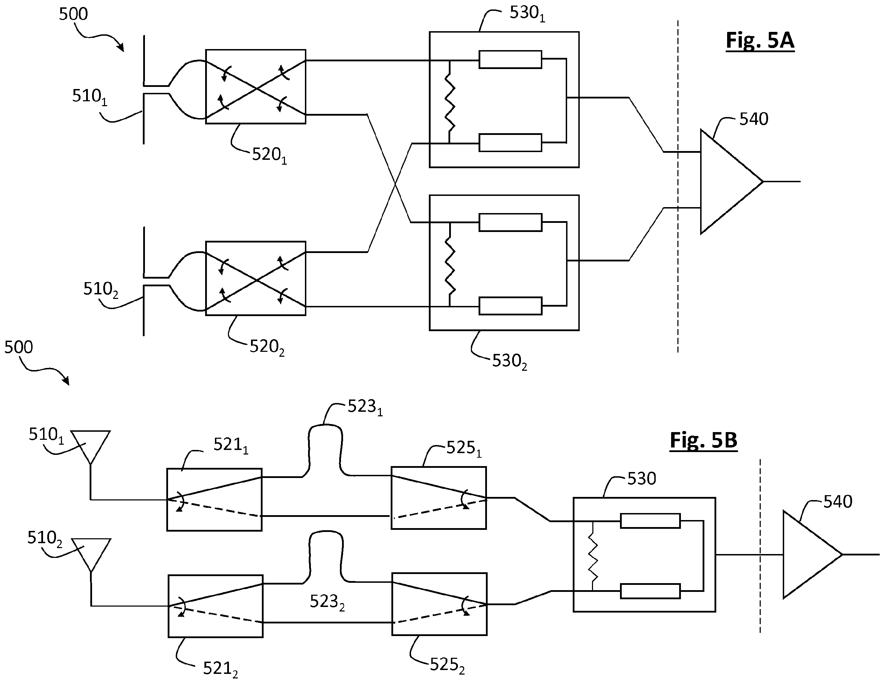

La Fig. 5A représente un premier exemple de réalisation d'un étage de multiplexage par codes, 500, pour le récepteur IR-UWB multi-antenne de la Fig. 4.

Dans cet exemple, le nombre d'antennes est pris égal à $M = 2$.

Les deux antennes de réception, $510_1$ et $510_2$, sont des antennes différentielles. Par définition, une antenne différentielle en réception est une antenne symétrique qui fournit deux signaux de réception identiques mais en opposition de phase.

Les deux signaux opposés en sortie de la première antenne différentielle $510_1$ sont respectivement fournis à une première entrée et une seconde entrée d'un premier commutateur DPDT $520_1$. De manière similaire, les deux signaux opposés en sortie de la seconde antenne différentielle $510_2$ sont respectivement fournis à une première entrée et une seconde entrée du second commutateur DPDT $520_2$. Les deux commutateurs $520_1$ et $520_2$ sont commutés au rythme du code de multiplexage, à savoir $f_{PRP}/P$, le premier commutateur étant contrôlé par le code $c_i^1$, $i=0,...,N_p-1$, et le second par $c_i^2$, $i = 0,...,N_p-1$.

Chacun des deux commutateurs DPDT commute ses première et seconde entrées respectivement vers ses première et seconde sorties, dans une première position de commutation et, respectivement vers ses seconde et première sorties, dans une seconde position de commutation.

La première sortie du premier commutateur $520_1$ et la première sortie du second commutateur $520_2$ sont combinées dans un premier combineur RF, $530_1$. De manière similaire, la seconde sortie du premier commutateur $520_1$ et la seconde sortie du second commutateur $520_2$ sont combinées dans un second combineur RF, $530_2$. Ainsi, selon les positions de commutation respectives des deux commutateurs $520_1$ et $520_2$, apparaissent sur les sorties des combineurs RF, $c_i^1 s_1 + c_i^2 s_2$ où $c_i^1 \in \{-1,+1\}$, $c_i^2 \in \{-1,+1\}$, les signaux en sortie des deux combineurs RF étant en opposés. Ces deux signaux sont ensuite fournis aux entrées d'un amplificateur différentiel bas bruit (LNA), 540, du frontal RF mutualisé.

La Fig.5B représente un second exemple d'implémentation d'un étage de mutliplexage par codes, 500, pour le récepteur IR-UWB multi-antenne de la Fig.4.

Dans ce second exemple de réalisation, le récepteur peut comporter un nombre arbitraire $M \geq 2$ d'antennes.

Le signal reçu par une antenne $510_m$ est commuté par un premier commutateur SPDT, $521_m$, soit vers une première sortie connectée à la première extrémité d'une ligne à retard demi-onde, $523_m$, la longueur d'onde correspondant à la fréquence centrale de l'impulsion élémentaire du signal IR-UWB), soit vers une seconde sortie. La seconde extrémité de la ligne à retard est reliée à une première entrée d'un second commutateur $525_m$ et la seconde sortie du premier commutateur est reliée directement à une seconde entrée du second commutateur. Les commutateurs $521_m$ et $525_m$ sont contrôlés par un même signal de commutation. Dans une première position des commutateurs, le signal reçu par l'antenne $510_m$ est retardé par la ligne demi-onde avant d'être fourni sur la sortie du second commutateur. Dans une seconde position des commutateurs, le signal reçu par l'antenne est directement fourni à la sortie du second commutateur.

Il convient de noter que la ligne demi-onde joue le rôle d'un simple déphaseur et ne permet en théorie que d'inverser un signal à bande étroite autour de la fréquence $f = c/\lambda$, elle pourra cependant être utilisée en pratique pour un signal IR-UWB de bande passante 1-2 GHz. Alternativement, on pourra utiliser des cellules LC en lieu et place de la ligne demi-onde pour réaliser le déphasage de $\pi$ à la fréquence centrale.

En tout état de cause, les sorties des seconds commutateurs $525_m$, $m = 1,...,M$ sont combinées dans un combineur RF 530 et le signal résultant est fourni à l'amplificateur bas bruit 540 du frontal RF mutualisé.

Avantageusement, l'homme du métier pourra intégrer les commutateurs et les combineurs au sein de l'amplificateur bas bruit, selon la technique CM-LNA précitée, de manière à réduire le bruit additionnel et les pertes.

Enfin, l'homme du métier comprendra que dans les deux exemples de réalisation illustrés en Figs. 5A et 5B, les signaux RF ne sont avantageusement pas divisés par 2 (au moyen d'un splitter 3dB) dans l'étage de multiplexage. Les seules pertes éventuelles sont dues aux interrupteurs. De même, la bande passante de l'étage de multiplexage n'est limitée que par la bande passante des interrupteurs et, dans le second exemple de réalisation, par la bande passante du déphaseur.

## Revendications

**1.** Récepteur ultra-wideband, UWB, impulsionnel comprenant une pluralité $M$ d'antennes ($310_1$,...,$310_M$), chaque antenne du récepteur recevant un signal d'antenne, ledit signal d'antenne étant un signal UWB impulsionnel formé d'impulsions successives modulées au moyen d'un code d'émission à une fréquence bribe, $f_{PRP}$, un symbole d'information étant codé sur $N_c$ impulsions successives, où $N_c$ est la longueur du code d'émission, le récepteur UWB comprenant:

- un étage de multiplexage (320) configuré pour multiplexer au moyen de codes orthogonaux les signaux d'antennes pour fournir un signal multiplexé, chaque code orthogonal étant associé à une antenne distincte, la fréquence bribe desdits codes orthogonaux étant égale à un sous-multiple, $f_{PRP} / P$, de la fréquence bribe du code d'émission où $P < N_c$ est un diviseur entier de $N_c$ ;
- un frontal RF (330) recevant ledit signal multiplexé ;
- un étage de démultiplexage (340) configuré pour démultiplexer le signal en sortie du frontal RF au moyen desdits codes orthogonaux, ledit étage de démultiplexage fournissant $M$ signaux démultiplexés correspondant aux différentes antennes.

**2.** Récepteur UWB impulsionnel selon la revendication 1, **caractérisé en ce que** l'étage de multiplexage (320) comprend des multiplieurs ($321_1$,...,$321_M$), chaque multiplieur étant configuré pour multiplier chaque signal d'antenne par le code orthogonal associé à cette antenne, les différents codes orthogonaux étant fournis aux multiplieurs à la fréquence $f_{PRP} / P$, ainsi qu'un sommateur configuré pour sommer les signaux d'antennes ainsi multipliés.

**3.** Récepteur UWB impulsionnel selon la revendication 1, **caractérisé en ce que** $M = 2$ et que les antennes sont des antennes différentielles ($510_1$, $510_2$), un signal d'antenne d'une première antenne différentielle ($510_1$) étant fourni à une première entrée d'un premier commutateur ($520_1$) et un signal d'antenne opposé, à une seconde entrée dudit premier commutateur, un signal d'antenne d'une seconde antenne différentielle ($510_2$) étant fourni à une première entrée d'un second commutateur ($520_2$) et un signal d'antenne opposé, à une seconde entrée dudit second commutateur, un premier signal de sortie dudit premier commutateur étant fourni à un premier combineur RF ($530_1$) et un second signal de sortie dudit premier commutateur étant fourni à un second combineur RF ($530_2$), un premier signal de sortie dudit second commutateur étant fourni au premier combineur RF et un second signal de sortie dudit second commutateur étant fournie au second combineur RF, les premier et second commutateurs commutant leurs première et seconde entrées respectivement vers leurs première et seconde sorties dans une première position de commutation et vers leurs seconde et première sorties dans une seconde position de commutation, les premier et second commutateurs étant contrôlés par les codes orthogonaux respectivement associés à la première antenne et la seconde antenne différentielle, le premier combineur RF ($530_1$) combinant le premier signal de sortie du premier commutateur et le premier signal de sortie du second commutateur pour fournir un premier signal combiné, le second combineur RF ($530_2$) combinant le second signal de sortie du premier commutateur et le second signal de sortie du second commutateur pour fournir un second signal combiné, les premier et second signaux combinés étant fournis à une entrée différentielle du frontal RF.

**4.** Récepteur UWB impulsionnel selon la revendication 3, **caractérisé en ce que** le frontal RF comprend un amplificateur bas bruit différentiel (540), les premier et second signaux combinés étant fournis à cet amplificateur comme entrée différentielle.

**5.** Récepteur UWB impulsionnel selon la revendication 1, **caractérisé en ce que** chaque signal d'antenne est fourni à un premier commutateur ($521_m$) le commutant vers un déphaseur dans une première position de commutation et vers la seconde entrée d'un second commutateur ($525_m$) dans une seconde position de commutation, la première entrée du second commutateur recevant le signal d'antenne déphasé par le déphaseur, le second commutateur commutant sa première entrée vers sa sortie dans une première position de commutation et sa seconde entrée vers sa sortie dans une seconde position de commutation, les premier et second commutateurs étant contrôlés par le code orthogonal associé à ladite antenne, les signaux de sortie des seconds commutateurs étant combinés dans un combineur RF (530) pour fournir ledit signal multiplexé au frontal RF.

**6.** Récepteur UWB impulsionnel selon la revendication 5, **caractérisé en ce que** le frontal RF comprend un amplificateur bas bruit (540), ledit signal multiplexé étant fourni à l'entrée dudit amplificateur.

**7.** Récepteur UWB impulsionnel selon l'une des revendications précédentes, **caractérisé en ce que** lesdites impulsions sont sinusoïdales à une fréquence centrale $f_0$ et que le frontal RF comprend un mélangeur en quadrature (332) à cette fréquence pour translater le signal multiplexé en bande de base.

**8.** Récepteur UWB impulsionnel selon la revendication 7, **caractérisé en ce que** le frontal RF comprend un convertisseur analogique numérique pour convertir le signal multiplexé en bande de base.

**9.** Récepteur UWB impulsionnel selon l'une des revendications précédentes, **caractérisé en ce que** l'étage de démultiplexage (340) comprend une pluralité $M$ corrélateurs ($341_m, 342_m$), chaque corrélateur étant configuré pour corréler le signal en sortie du frontal RF sur un temps symbole avec un code composite $C^m_{\left[\frac{\ell}{P}\right]} c^e_\ell$, $\ell = 0,...,N_c$ -1 où $c^e_\ell$, $\ell = 0,...,N_c$ -1 est le code d'émission et $c^m_i$, $i = 0,..., N_p$ -1, est le code orthogonal associé à l'antenne $m$.

**10.** Récepteur UWB impulsionnel selon l'une des revendications précédentes, **caractérisé en ce qu'**il comprend un étage de traitement multi-antenne recevant lesdits $M$ signaux démultiplexés et configuré pour effectuer un traitement parmi une formation de faisceau, une détermination de direction d'arrivée, un décodage spatial ou spatio-temporel.

**Patentansprüche**

**1.** Ultrabreitband-Impuls-UWB-Empfänger mit einer Vielzahl $M$ von Antennen ($310_1$, ..., $310_M$), wobei jede Antenne des Empfängers ein Antennensignal empfängt, wobei das Antennensignal ein Impuls-UWB-Signal ist, das aus aufeinanderfolgenden Impulsen gebildet wird, die mit Hilfe eines Sendecodes mit einer Chipfrequenz $f_{PRP}$ moduliert werden, wobei ein Informationssymbol über $N_c$ aufeinanderfolgende Impulse codiert wird, wobei $N_c$ die Länge des Sendecodes ist, wobei der UWB-Empfänger enthält:

- eine Multiplexstufe (320), die dazu ausgelegt ist, mittels orthogonaler Codes die Antennensignale zu multiplexen, um ein Multiplexsignal bereitzustellen, wobei jeder orthogonale Code einer separaten Antenne zugeordnet ist, wobei die Chipfrequenz der orthogonalen Codes gleich einem Teiler $f_{PRP}$ / $P$ der Chipfrequenz des Sendecodes ist, wobei $P < N_c$ ein ganzzahliger Teiler von $N_c$ ist;
- ein HF-Frontend (330), das das genannte Multiplexsignal empfängt;
- eine Demultiplexstufe (340), die dazu ausgelegt ist, das Signal am Ausgang des HF-Frontends mit Hilfe der orthogonalen Codes zu demultiplexen, wobei die Demultiplexstufe $M$ Demultiplexsignale bereitstellt, die den verschiedenen Antennen entsprechen.

**2.** Impuls-UWB-Empfänger nach Anspruch 1,
**dadurch gekennzeichnet, dass**
die Multiplexstufe (320) Multiplizierer ($321_1$, ..., $321_M$) enthält, wobei jeder Multiplizierer dazu ausgelegt ist, jedes Antennensignal mit dem dieser Antenne zugeordneten orthogonalen Code zu multiplizieren, wobei die verschiedenen orthogonalen Codes den Multiplizierern mit der Frequenz $f_{PRP}$ / $P$ zugeführt werden, sowie einen Summierer, der dazu ausgelegt ist, die so multiplizierten Antennensignale zu summieren.

**3.** Impuls-UWB-Empfänger nach Anspruch 1,
**dadurch gekennzeichnet, dass**

$M$ = 2 und dass die Antennen Differentialantennen ($510_1$, $510_2$) sind, wobei ein Antennensignal einer ersten Differentialantenne ($510_1$) einem ersten Eingang eines ersten Schalters ($520_1$) und ein Gegenantennensignal einem zweiten Eingang des Schalters zugeführt wird, wobei ein Antennensignal einer zweiten Differentialantenne ($510_2$) einem ersten Eingang eines zweiten Schalters ($520_2$) und ein Gegenantennensignal einem zweiten Eingang des zweiten Schalters zugeführt wird, wobei ein erstes Ausgangssignal des ersten Schalters einem ersten HF-Kombinator ($530_1$) und ein zweites Ausgangssignal des ersten Schalters einem zweiten HF-Kombinator ($530_2$) zugeführt wird, wobei ein erstes Ausgangssignal des zweiten Schalters dem ersten HF-Kombinator und ein zweites Ausgangssignal des zweiten Schalters dem zweiten HF-Kombinator zugeführt wird, wobei der erste und der zweite Schalter ihren ersten und ihren zweiten Eingang in einer ersten Schaltposition auf ihren ersten bzw. ihren zweiten Ausgang und in einer zweiten Schaltposition auf ihren zweiten bzw. ihren ersten Ausgang schalten, wobei der erste und der zweite Schalter durch die orthogonalen Codes gesteuert werden, die jeweils der ersten Antenne bzw. der zweiten Differentialantenne zugeordnet sind, wobei der erste HF-Kombinator ($530_1$) das erste Ausgangssignal des ersten Schalters und das erste Ausgangssignal des zweiten Schalters kombiniert, um ein erstes kombiniertes Signal bereitzustellen, wobei der zweite HF-Kombinator ($530_2$) das zweite Ausgangssignal des ersten Schalters und das zweite Ausgangssignal des zweiten Schalters kombiniert, um ein zweites kombiniertes Signal bereitzustellen, wobei das erste und das zweite kombinierte Signal an einem Differenzeingang des HF-Frontends bereitgestellt werden.

**4.** Impuls-UWB-Empfänger nach Anspruch 3,
**dadurch gekennzeichnet, dass**
das HF-Frontend einen rauscharmen Differenzverstärker (540) enthält, wobei das erste und das zweite kombinierte Signal diesem Verstärker als Differenzeingang zugeführt werden.

**5.** Impuls-UWB-Empfänger nach Anspruch 1,
**dadurch gekennzeichnet, dass**
jedes Antennensignal einem ersten Schalter ($521_m$) zugeführt wird, der es in einer ersten Schaltstellung auf einen Phasenschieber schaltet und in einer zweiten Schaltstellung auf den zweiten Eingang eines zweiten Schalters ($525_m$) schaltet, wobei der erste Eingang des zweiten Schalters das vom Phasenschieber phasenverschobene Antennensignal empfängt, wobei der zweite Schalter in einer ersten Schaltstellung seinen ersten Eingang auf seinen Ausgang und in einer zweiten Schaltstellung seinen zweiten Eingang auf seinen Ausgang schaltet, wobei der erste und der zweite Schalter durch den der Antenne zugeordneten orthogonalen Code gesteuert werden, wobei die Ausgangssignale der zweiten Schalter in einem HF-Kombinator (530) kombiniert werden, um das Multiplexsignal am HF-Frontend bereitzustellen.

**6.** Impuls-UWB-Empfänger nach Anspruch 5,
**dadurch gekennzeichnet, dass**
das HF-Frontend einen rauscharmen Verstärker (540) enthält, wobei das Multiplexsignal am Eingang des Verstärkers bereitgestellt wird.

**7.** Impuls-UWB-Empfänger nach einem der vorangehenden Ansprüche,
**dadurch gekennzeichnet, dass**
die Impulse bei einer Mittenfrequenz $f_0$ sinusförmig sind und dass das HF-Frontend einen Quadraturmischer (332) bei dieser Frequenz zur Umsetzung des Multiplexsignals in das Basisband enthält.

**8.** Impuls-UWB-Empfänger nach Anspruch 7,
**dadurch gekennzeichnet, dass**
das HF-Frontend einen Analog-Digital-Wandler zur Umwandlung des Multiplexsignals in das Basisband enthält.

**9.** Impuls-UWB-Empfänger nach einem der vorangehenden Ansprüche,
**dadurch gekennzeichnet, dass**
die Demultiplexstufe (340) eine Vielzahl $M$ von Korrelatoren ($341_m$, $342_m$) enthält, wobei jeder Korrelator dazu ausgelegt ist, das Signal am Ausgang des HF-Frontends über eine Symbolzeit mit einem zusammengesetzten Code

$$C^m_{\left\lfloor \frac{\ell}{P} \right\rfloor} C^e_\ell \text{, } \ell=0,...,N_c\text{-1 zu korrelieren, wobei } C^e_\ell \text{ , } \ell=0,...,N_c\text{-1 der Sendecode und } C^m_i \text{ , } i=0,...,N_p\text{-1 der der Antenne}$$

m zugeordnete orthogonale Code ist.

**10.** Impuls-UWB-Empfänger nach einem der vorangehenden Ansprüche,
**dadurch gekennzeichnet, dass**

er eine Mehrantennen-Verarbeitungsstufe enthält, die die $M$ Demultiplexsignale empfängt und dazu ausgelegt ist, eine Verarbeitung aus Strahlformung, Bestimmung der Ankunftsrichtung, oder Raum-Dekodierung oder Raum-Zeit-Dekodierung durchzuführen.

**Claims**

1. An impulse ultra-wideband, UWB, receiver comprising a plurality $M$ of antennas ($310_1$, ..., $310_M$), each antenna of the receiver receiving an antenna signal, said antenna signal being an impulse UWB signal formed by successive impulses modulated by means of an emitting code at a chip frequency, $f_{PRP}$, an information symbol being coded over $N_c$ successive impulses, where $N_c$ is the length of the emitting code, the UWB receiver comprising

   - a multiplexing stage (320) configured to multiplex antenna signals by means of orthogonal codes to provide a multiplexed signal, each orthogonal code being associated with a distinct antenna, the chip frequency of said orthogonal codes being equal to a sub-multiple, $f_{PRP}/P$, of the chip frequency of the emitting code where P < $N_c$ is an integer divisor of $N_c$;
   - an RF front end (330) receiving said multiplexed signal;
   - a demultiplexing stage (340) configured to demultiplex the signal output from the RF front end by means of said orthogonal codes, said demultiplexing stage providing M demultiplexed signals corresponding to the different antennas.

2. The impulse UWB receiver according to claim 1, **characterised in that** the multiplexing stage (320) comprises multipliers ($321_1$, ..., $321_M$), each multiplier being configured to multiply each antenna signal by the orthogonal code associated with this antenna, the different orthogonal codes being provided to the multipliers at the frequency $f_{PRP}/P$, as well as a summer configured to sum the antenna signals thus multiplied.

3. The impulse UWB receiver according to claim 1, **characterised in that** $M$ = 2 and that the antennas are differential antennas ($510_1$, $510_2$), an antenna signal of a first differential antenna ($510_1$) being provided to a first input of a first switch ($520_1$) and an opposite antenna signal, to a second input of said first switch, an antenna signal of a second differential antenna ($510_2$) being provided to a first input of a second switch ($520_2$) and an opposite antenna signal, to a second input of said second switch, a first output signal of said first switch being provided to a first RF combiner ($530_1$) and a second output signal of said first switch being provided to a second RF combiner ($530_2$), a first output signal of said second switch being provided to the first RF combiner and a second output signal of said second switch being provided to the second RF combiner, the first and second switches respectively switching their first and second inputs to their first and second outputs in a first switching position and to their second and first outputs in a second switching position, the first and second switches being controlled by the orthogonal codes associated with the first antenna and the second differential antenna respectively, the first RF combiner ($530_1$) combining the first output signal of the first switch and the first output signal of the second switch to provide a first combined signal, the second RF combiner ($530_2$) combining the second output signal of the first switch and the second output signal of the second switch to provide a second combined signal, the first and second combined signals being provided to a differential input of the RF front end.

4. The impulse UWB receiver according to claim 3, **characterised in that** the RF front end comprises a differential low noise amplifier (540), the first and second combined signals being provided to this amplifier as a differential input.

5. The impulse UWB receiver according to claim 1, **characterised in that** each antenna signal is provided to a first switch ($521_m$) switching it to a phase shifter in a first switching position and to the second input of a second switch ($525_m$) in a second switching position, the first input of the second switch receiving the antenna signal phase shifted by the phase shifter, the second switch switching its first input to its output in a first switching position and its second input to its output in a second switching position, the first and second switches being controlled by the orthogonal code associated with said antenna, the output signals of the second switches being combined in an RF combiner (530) to provide said multiplexed signal to the RF front end.

6. The impulse UWB receiver according to claim 5, **characterised in that** the RF front end comprises a low noise amplifier (540), said multiplexed signal being provided to the input of said amplifier.

7. The impulse UWB receiver according to one of the previous claims, **characterised in that** said impulses are sinusoidal at a centre frequency $f_0$ and that the RF front end comprises a quadrature mixer (332) at this frequency to translate the multiplexed signal into baseband

8.  The impulse UWB receiver according to claim 7, **characterised in that** the RF front end comprises an analog-to-digital converter to convert the multiplexed signal into baseband.

9.  The impulse UWB receiver according to one of the previous claims, **characterised in that** the demultiplexing stage (340) comprises a plurality $M$ of correlators ($341_m$, $342_m$), each correlator being configured to correlate the signal output from the RF front end over a symbol time with a composite code $c^m_{\left\lfloor \frac{\ell}{P} \right\rfloor} c^e_\ell$, $\ell = 0,...,N_c-1$, where $c^e_\ell$, $\ell = 0,...,N_c-1$ is the emitting code and $c^m_i$, $i = 0,...,N_p-1$, is the orthogonal code associated with the antenna $m$.

10. The impulse UWB receiver according to one of the previous claims, **characterised in that** it comprises a multi-antenna processing stage receiving said $M$ demultiplexed signals and configured to perform a process among beamforming, determining a direction of arrival, spatial or spatio-temporal decoding.

EP 3 503 413 B1

**Fig. 1**

**Fig. 2**

**Fig. 3**

**Fig. 4**

EP 3 503 413 B1

Fig. 5A

Fig. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080317160 A1

- CN 106533518 A

**Littérature non-brevet citée dans la description**

- **T. KAISER et al.** An overview of Ultra-Wide-Band systems with MIMO. *Proc. of the IEEE,* vol. 97 (2), 285-312
- **F. TZENG et al.** A CMOS code-modulated path-sharing multi-antenna receiver front-end. *IEEE Journal of Solid State Circuits,* Mai 2009, vol. 44 (5), 1321-1335

- **E. ALWAN et al.** Coding-based ultra-wideband digital beamformer with significant hardware réduction. *Analog Integrated Circuits and Signal Processing,* Juillet 2013, vol. 78 (3), 691-703